# EUROPEAN PATENT SPECIFICATION

(11) **EP 1 592 188 B1**
(45) Date of publication and mention of the grant of the patent: **02.08.2006**
(21) Application number: 04101878.9
(22) Date of filing: 30.04.2004
(51) Int. Cl.: H04L 12/58, H04L 29/06

(54) **Method and apparatus for transmission of digitally signed electronic mail**
Verfahren und Vorrichtung zur Übertragung von digital signierter E-Mail
Procédé et appareil de transmission de courrier électronique signé numériquement

(43) Date of publication of application: 02.11.2005
(73) Proprietor: Research In Motion Limited, Waterloo, Ontario N2L 3W8 (CA)
(72) Inventor: Brown, Michael K., Kitchener, Ontario N2M 2Z2 (CA); Brown, Michael S., Waterloo, Ontario N2K 4B1 (CA); Kirkup, Michael G., Waterloo, Ontario N2K 3X5 (CA)
(74) Representative: Rickard, David John

(56) References cited:
- WO-A-00/31944
- WO-A-03/001326
- RAMSDELL B: "RFC 2633: S/MIME Version 3 Message Specification" INTERNET ENGINEERING TASK FORCE, NETWORK WORKING GROUP, June 1999 (1999-06), XP002262227

## Description

This invention relates generally to computing systems and, more particularly, to computing systems for the creation and transmission of secure electronic mail.

Electronic mail (e-mail) systems will, in many cases, include a feature to allow e-mail messages to be digitally signed. A digital signature is an encoded value that is included with an e-mail message to provide a recipient with information to confirm that the message is sent by a trusted sender and/or that the message is unchanged during the transmission process. Such an email system is considered a secure e-mail system. A well-known protocol for secure e-mail is the Secure Multi-Purpose Internet Mail Extension (S/MIME).

Two different types of digital signature schemes are in common use in secure e-mail: opaque and clear. An opaque signature is one where the secure e-mail has the message content contained inside the digital signature encoding. This approach, defines a signature for the message content and then encodes both that signature and the message content. The resulting encoded data is then transmitted as the e-mail message body.

A clear signature is one in which a digital signature is encoded and included with the e-mail message as an attachment. The message content is not altered and is sent in this unaltered state in the message body of the e-mail.

An advantage of an opaque e-mail message is that the content of the message is not available to recipients who are not provided with the appropriate information to decode the e-mail message body. In addition, since the message content is not immediately available, there is less of a potential for an email gateway to modify the message in some way and, in doing so, invalidate the digital signature. However, a disadvantage to the use of opaque signatures for secure e-mail is that many e-mail applications (for example Outlook 2000™ from Microsoft Corporation) are unable to display opaque signed messages in the message preview pane. To obtain the preview of the message, a user of such an e-mail application is required to open the email, thus defeating the advantages associated with the use of a preview view in the e-mail application. Further, where a receiving e-mail application does not support the protocol used to encode the e-mail, the content of an opaque signed e-mail message cannot be viewed at all.

WO/0031944 discloses a gateway connected in a local area network (LAN) which interacts with a local mail server and remote servers via a firewall and the Internet. The gateway automatically generates certificates for senders on-the-fly. It also caches third party certificates so that they are available for sending encrypted and/or signed messages to remote recipients. The gateway also automatically requests third party certificates on-the-fly when required for outgoing certificates.

WO/03001326 discloses an email firewall that applied security procedures for the transmission and reception of email messages. The firewall employs signature verification processes to verify signatures in received encrypted email messages and is arranged to use external servers for doing so. The external servers are used to retrieve data that is employed to encrypt and decrypt email messages transmitted and received by the firewall.

The Internet Engineering Task Force (IETF) Request for Comments (RFC) document 2633 discloses a method to send and receive Secure Internet Multipurpose Mail Extensions (S/MIME) data. S/MIME can be used in automated message transfer agents that use cryptographic security services that do not require human intervention such as the signing of software generated messages.

It is therefore desirable to have a mechanism for permitting secure e-mails that are created as opaque signed to be transmitted to allow a receiving e-mail application to display such e-mails using a preview view or to allow the content of such e-mail messages to be accessible, despite a receiving e-mail application not supporting the opaque signed protocol of the sending e-mail application

According to an aspect of the invention there is provided a method and system for the transmission of e-mails to provide for conversion of secure e-mail to permit a receiving e-mail application to use a preview view for the e-mail or to access the message content without decoding the digital signature.

According to another aspect of the invention there is provided a computer implemented method for transmitting e-mail, the method including the following steps:
sending a secure first e-mail message addressed to a recipient and including an opaque signature to an e-mail server;
decoding the first e-mail message at the e-mail server to extract the content of the first e-mail message and to extract the digital signature of the first e-mail message;
generating a clear signed e-mail message at the e-mail server, the clear signed message including both the extracted content of, and the extracted digital signature of, the first e-mail message; and
forwarding the clear signed e-mail message to the recipient.

According to another aspect of the invention there is provided the above method in which the first e-mail message conforms to the S/MIME standard.

According to another aspect of the invention there is provided the above method in which the step of extracting the content of and the digital signature of the first e-mail message includes the steps of:
identifying the object encapContentInfo for the opaque signed e-mail message;
copying and deleting the eContent value from encapContentInfo; and
defining the extracted content and the extracted digital signature as the content and the
digital signature in the clear signed e-mail message.

According to another aspect of the invention there is provided the above method further including the step of determining whether the first e-mail message meets a set of pre-defined criteria for conversion to clear signed format.

According to another aspect of the invention there is provided an apparatus for transmitting e-mail, including an e-mail server, the e-mail server including:
computer code executable to receive an opaque signed e-mail message;
computer code executable to decode the opaque signed e-mail message to extract the content of the opaque signed e-mail message and to extract the digital signature of the opaque signed e-mail message;
computer code for generating a clear signed e-mail message, the clear signed message including both the extracted content of, and the extracted digital signature of, the first e-mail message; and
computer code for forwarding the clear signed e-mail message to the recipient.

According to another aspect of the invention there is provided the above apparatus in which the first secure e-mail message conforms to the S/MIME standard.

According to another aspect of the invention there is provided the above apparatus in which the computer code for extracting the content of and the digital signature of the opaque signed e-mail message includes the steps of:
identifying the object encapContentInfo for the opaque signed e-mail message;
copying and deleting the eContent value from encapContentInfo; and
defining the extracted content and the extracted digital signature as the content and the
digital signature in the clear signed e-mail message.

According to another aspect of the invention there is provided the above apparatus further including computer code for determining whether the opaque signed e-mail message meets a set of pre-defined criteria for conversion to clear signed format.

Advantages of the invention include the ability for a sending e-mail application to use opaque signatures for outbound e-mails and for a receiving e-mail application to be able to view the message content and/or generate a preview of such secure e-mails without needing to decode the associated digital signature.

### Brief Description of the Drawings

In drawings which illustrate by way of example only a preferred embodiment of the invention,
Figure 1 is block diagram showing aspects of the transmission of e-mails in accordance with the preferred embodiment.
Figure 2 is a block diagram illustrating the elements of opaque signed and clear signed e-mail messages (prior art).
Figure 3 is a flow diagram illustrating the conversion of opaque signed e-mails in accordance with the preferred embodiment.

### Description of the Preferred Embodiments.

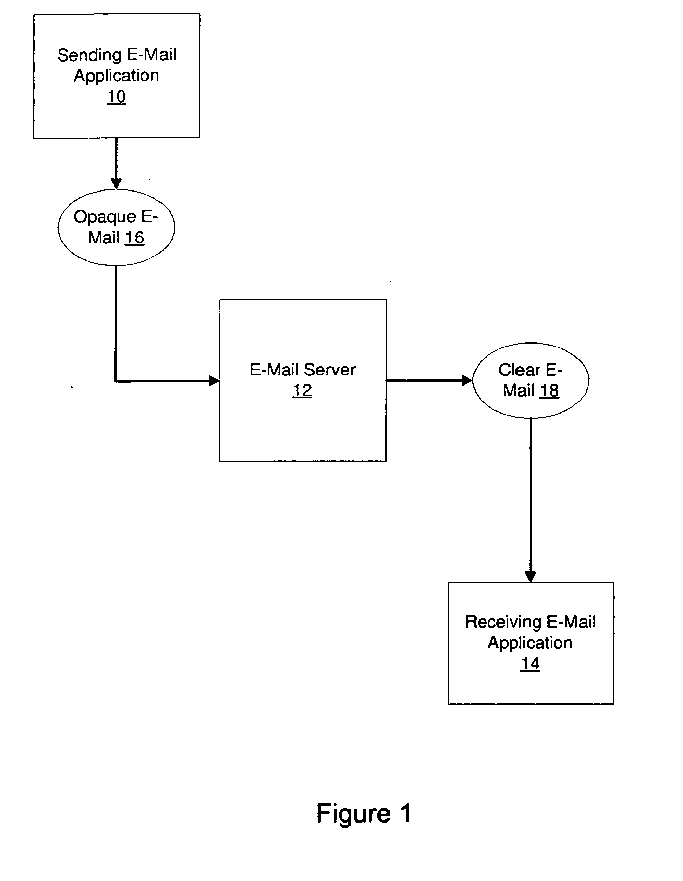

The preferred embodiment is described with reference to an e-mail system in which an e-mail application forwards e-mails to an e-mail server for transmission to a recipient or receiving e-mail application. The block diagram of Figure 1 illustrates one such arrangement. Sending e-mail application 10 uses e-mail server 12 to handle outbound e-mails generated by e-mail application 10. In the example of Figure 1, receiving e-mail application 14 is a recipient of e-mails from sending e-mail application 10.

The preferred embodiment is described with reference to sending and receiving e-mail applications. It will be understood by those skilled in the art that an e-mail application includes program code that is executable to provide a user with the ability to manipulate e-mail messages. Typically, an e-mail application will provide the user with functions for creating, sending, receiving, viewing, and storing e-mail messages. Subsets of these functions may also be provided in different e-mail applications intended to be used with particular devices. The program code of an e-mail application may be executable on a personal computer, a wireless handheld device, or other devices that are intended to permit e-mails to be created or read.

The example of Figure 1 shows opaque e-mail 16 being forwarded from sending e-mail application 10 to e-mail server 12. As will be understood by those skilled in the art, e-mail application 10 may be one of many commercially available or custom-developed e-mail systems. E-mail application 10 does, however, have the capability of generating secure e-mail using an opaque signature. In the example of Figure 1, opaque e-mail 16 is such an e-mail generated by e-mail application 10.

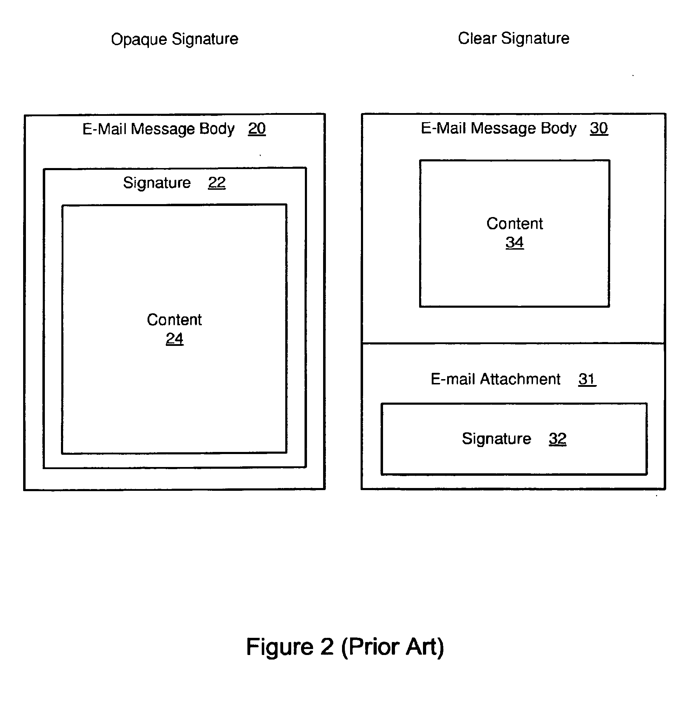

Figure 2 is a block diagram that illustrates the high level elements of an e-mail message having an opaque signature and provides a similar illustration for an e-mail having a clear signature. In Figure 2, a generalized example of an opaque signed e-mail is illustrated with e-mail message body 20 shown as containing signature 22 which, in turn, contains content 24 within its encoding. As referred to above, signature 22 is encoded. Also in Figure 2, a generalized example of a clear signed e-mail is illustrated with e-mail message body 30 and e-mail attachment 31. E-mail message body 30 includes content 34 which is not encoded within the signature. In the case of this clear signed e-mail, signature 32 is encoded and is placed in e-mail attachment 31.

As will be appreciated by the elements of the e-mail formats shown in Figure 2, when opaque e-mail 16 is sent from sending e-mail application 10, the content is found only in an encoded portion of the e-mail message body (shown as e-mail body 20 in Figure 2). When received by a recipient having an e-mail application, the message body of an opaque signed secure e-mail is processed and signature 22 is decoded to allow content 24 to be extracted and displayed. If the receiving e-mail application is unable to decode signature 22 then the e-mail cannot be displayed to the user with that application. Thus, for example, if an S/MIME format is used for creating the e-mail and the receiving e-mail application does not support S/MIME, the content of the e-mail cannot be accessed.

Further, in typical e-mail applications, there is a preview pane that is optionally displayed when lists of e-mail messages are displayed for a user. In such applications, it is typical for the preview pane to merely present the e-mail message content (or a portion of the content) without decoding such content. Thus, when an e-mail is sent in an opaque signed format, the message is not viewable in the preview pane of such a receiving e-mail application.

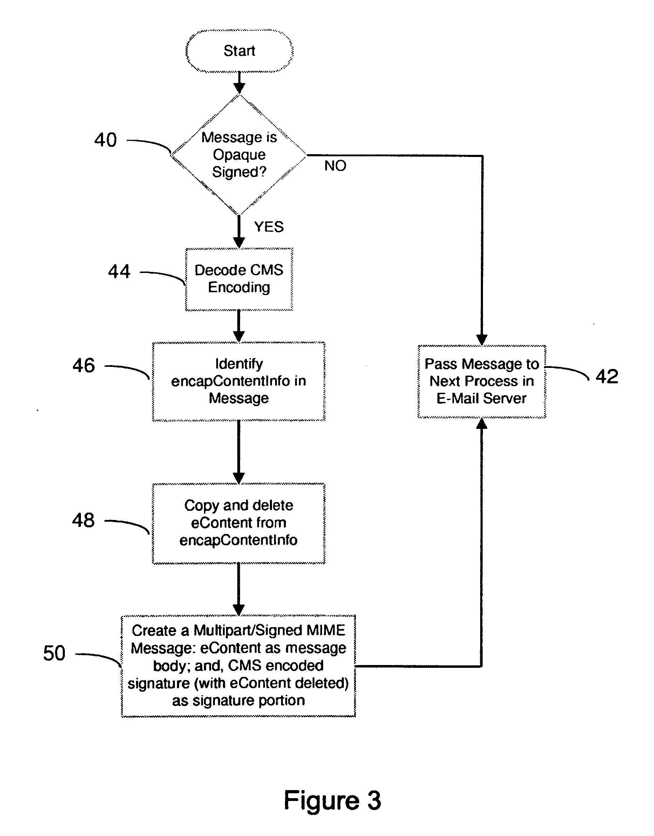

According to the preferred embodiment, e-mail is transmitted through an e-mail server. The e-mail server includes program code for converting opaque signed e-mail to a clear signed format. This can be seen in the example of Figure 1. Sending e-mail application 10 generates example e-mail 16, in opaque signed S/MIME format. In the preferred embodiment this e-mail is forwarded to e-mail server 12, prior to the e-mail being sent to receiving e-mail application 14. According to the preferred embodiment, the functionality of e-mail server 12 includes a conversion function to convert opaque signed messages to clear signed messages. As will be appreciated, e-mail server 12 is able to decrypt the opaque signed messages sent by sending e-mail application 10. In the preferred embodiment the encoding of e-mail 16 is an S/MIME encoding and the steps carried out to convert e-mail message 16 into a clear signed format (e-mail 18) are set out in the flow diagram of Figure 3. In general, the step of conversion includes extraction of the message content and of the digital signature from the opaque signed e-mail, the extracted message content and the extracted digital signature then being included in a clear signed e-mail message that e-mail server 12 sends to the recipient.

As shown in decision box 40 in Figure 3, the first step carried out in the conversion process at the e-mail server is to determine whether the e-mail message is opaque signed or not. In the case of an S/MIME message, this process is carried out by viewing the MIME content type of the message. If it is of type multipart/signed, then it is clear signed. Otherwise, a check on the Cryptographic Message Syntax (CMS) encoding of the message is carried out to determine if it is signed. Then is done by looking at the value of the contentInfo Object Identifier at the start of the encoding and seeing if it indicates that the message is signed. If it is signed, then it must be opaque signed, otherwise it may be encrypted, compressed or some other encoding mechanism used. If the message is not opaque signed, then as shown in step 42 of Figure 3, the message is passed to the next part of the process otherwise carried out by e-mail server 12 in transmitting the e-mail message to the recipient.

Alternatively, if the e-mail server determines that the e-mail message is opaque signed, step 44 of the conversion is to process the Cryptographic Message Syntax (CMS) encoding of the S/MIME message to decode the e-mail message. As indicated above, e-mail server 12 has the appropriate information available to permit the decoding of e-mail messages from e-mail application 10 that are encoded using the S/MIME format of the

### preferred embodiment.

Once the e-mail message has been decoded, step 46 is carried out. The conversion process identifies the encapContentInfo part of the S/MIME e-mail message (the part of the e-mail message object that in the S/MIME standard includes the message content and the digital signature). The next step in the conversion (step 48 in Figure 3) is to read the eContent part of the identified encapContentInfo. This is the message content and will form the clear message in a resulting converted clear signed e-mail message. As part of step 48, the eContent part is removed from the CMS encoding of the message (with the consequential update of the appropriate length information for the message). The resulting CMS encoding (minus the eContent) will form the signature for the converted clear signed e-mail message.

The last step in the conversion is to create a MIME message of type multipart/signed (the new clear signed e-mail message). The information to be used to define the new message has been defined as described with reference to the above steps. Step 50 of Figure 3 involves the creation of the message object that includes:
a. the contents of the eContent part of the opaque signed e-mail message becomes the message part of the clear signed e-mail message (see content 34 in the Figure 2); and
b. the CMS encoding of the signature (with the eContent removed) as the other parts of the multipart/signed message (including signature 32 as shown in Figure 2).

The result of the above conversion process is clear e-mail 18 as shown in the example of Figure 1. This e-mail is forwarded to receiving e-mail application 14 (as shown in Figure 1). Receiving e-mail application 14 recognizes the inbound e-mail as a clear signed format. Due to the presence of content in a non-encrypted (non-encoded) format, the preview pane for receiving e-mail application 14 is able to be used to display some or all of the content of clear e-mail 18. Similarly, receiving e-mail application need not support S/MIME format for the message content to be readable. In the latter case, it will be understood that the functions carried out by the digital signature are not available (as the signature is not readable by an application that does not support the encrypting process used for the original generation of the signature). However, as will be appreciated, the ability to read the message content, despite the absence of a useable digital signature, is a potentially advantageous feature of the system described.

The preferred embodiment is described with reference to e-mail that is sent via an e-mail server. Such a server may be used in systems where wireless handheld devices are used to create e-mail messages that are then transmitted to an enterprise e-mail server for forwarding through an Internet e-mail connection to recipients. Other implementations of the preferred embodiment may involve the transmission and conversion of e-mail through other systems that operate in a manner analogous to e-mail servers. In general, e-mail generated with an opaque signed format is forwarded to a computer system that includes a conversion function that permits the e-mail to be converted to a clear signed format before being sent to the receiving e-mail application. It will be appreciated that the conversion of the secure e-mail messages involves the decoding or decrypting of information and that therefore the e-mail servers in question are preferably secure to prevent the e-mail conversion process from being a point of insecurity for the e-mail system.

The e-mail server is typically implemented by way of an e-mail server application comprising program code that executes on a server computer. The e-mail server application may be delivered as a computer program product in a computer code storage medium such as a magnetic, optical or electronic storage device. Such an e-mail server application is typically installed on a server computer in executable form. The e-mail server in operation is an apparatus that is capable of carrying out the operations described.

In the preferred embodiment, the e-mail server includes program code that executes to carry out the conversion of the e-mail. The e-mail server also carries out other logging and administrative functions for e-mail applications. It will be appreciated that although the e-mail server that converts e-mails as described will often be associated with the sending e-mail application, it is also possible for such a conversion e-mail server to be associated with the receiving e-mail application. In such a case the e-mail server may be an enterprise server that receives e-mail and then redirects the e-mail to the appropriate recipient device. Such an arrangement is possible where the receiving e-mail application executes on a wireless handheld device and e-mails are routed through an enterprise server that sends e-mail to a desktop destination and to the wireless handheld device. In such an arrangement, the e-mail server associated with the receiving e-mail application may receive opaque signed e-mail messages. The e-mail server, if the appropriate information regarding the encoding of the opaque signed e-mail message is available to it, may operate to convert the e-mail message to a clear signed format.

In the preferred embodiment, the conversion function may be optionally invoked. In some contexts an opaque signed e-mail message may be desired even where a receiving e-mail application may not be able to access the e-mail content as a result. For this reason, an administrator for the e-mail server is able to selectively determine whether the conversion function will apply to e-mails handled by the e-mail server. A further extension involves the administrator applying a more sophisticated filter to the incoming e-mails to allow the e-mail server to convert opaque signed e-mails that meet a set of defined criteria (for example, sender name, recipient name, sender user group, and so forth).

Various embodiments of the present invention having been thus described in detail by way of example, it will be apparent to those skilled in the art that variations and modifications may be made without departing from the invention. The invention includes all such variations and modifications as fall within the scope of the appended claims.

## Claims

1. A computer implemented method for transmitting e-mail, the method comprising the following steps:
sending a secure first e-mail message (16) addressed to a recipient (14) and
comprising an opaque signature (22) to an e-mail server (12);
decoding the first e-mail message at the e-mail server (12) to extract the content of the first e-mail message and to extract the digital signature of the first e-mail message;
generating a clear signed e-mail message (18) at the e-mail server (12), the clear signed message comprising both the extracted content (34) of, and the extracted digital signature (32) of, the first e-mail message; and
forwarding the clear signed e-mail message to the recipient (14).

2. The method of claim 1 in which the first e-mail message (16) conforms to the S/MIME standard.

3. The method of claim 2 in which the step of extracting the content of and the digital signature of the first e-mail message comprises the steps of:
Identifying (46) the object encapContentInfo for the opaque signed e-mail message (16);
copying and deleting (48) the eContent value from encapContentInfo; and
defining (50) the extracted content (34) and the extracted digital signature (32) as the content and the digital signature in the clear signed e-mail message (18).

4. The method of any one of claims 1 to 3 further comprising the step of determining whether the first e-mail message meets a set of pre-defined criteria for conversion to clear signed format.

5. An apparatus for transmitting e-mail, comprising an e-mail server (12), the e-mail server comprising:
computer code means executable to receive an opaque signed e-mail message (16);
computer code means executable to decode the opaque signed e-mail message (16) to extract the content (24) of the opaque signed e-mail message and to extract the digital signature (22) of the opaque signed e-mail message;
computer code means for generating a clear signed e-mail message (18), the clear signed message comprising both the extracted content (34) of, and the extracted digital signature (32) of, the opaque e-mail message; and
computer code means for forwarding the clear signed e-mail message (18) to the recipient (14).

6. The apparatus of claim 5 in which the opaque secure e-mail message (16) conforms to the S/MIME standard.

7. The apparatus of claim 6 in which the computer code means for extracting the content (24) of and the digital signature (22) of the opaque signed e-mail message (16) implememnts the steps of:
identifying (46) the object encapContentInfo for the opaque signed e-mail message;
copying and deleting (48) the eContent value from encapContentInfo; and
defining (50) the extracted content and the extracted digital signature as the content and the digital signature in the clear signed e-mail message (18).

8. The apparatus of any one of claims 5 to 7 further comprising computer code means for determining whether the opaque signed e-mail message (16) meets a set of pre-defined criteria for conversion to clear signed format.

9. A computer readable medium comprising computer code means for the apparatus of any of claims 5 to 8 for implementing the method of any of claims 1 to 4.

## Patentansprüche

1. Ein computer-implementiertes Verfahren zur Übertragung von E-Mail, wobei das Verfahren die folgenden Schritte umfasst:
Senden einer sicheren ersten E-Mail-Nachricht (16), die an einen Empfänger (14) adressiert ist und eine opake Signatur (22) enthält, an einen E.Mail-Server (12);
Decodieren der ersten E-Mail-Nachricht am E-Mail-Server (12) zum Extrahieren des Inhalts der ersten E-Mail-Nachricht und zum Extrahieren der digitalen Signatur der ersten E-Mail-Nachricht;
Generieren einer klartextsignierten E-Mail-Nachricht (18) am E-Mail-Server (12), wobei die klartextsignierte Nachricht sowohl den extrahierten Inhalt (34) als auch die extrahierte digitale Signatur (32) der ersten E-Mail-Nachricht enthält; und
Weiterleiten der klartextsignierten E-Mail-Nachricht an den Empfänger (14).

2. Das Verfahren gemäß Anspruch 1, bei dem die erste E-Mail-Nachricht (16) dem S/MIME-Standard entspricht.

3. Das Verfahren gemäß Anspruch 2, bei dem der Schritt des Extrahierens des Inhalts und der digitalen Signatur der ersten E-Mail-Nachricht die folgenden Schritte umfasst:
Identifizieren (46) der Objekt-encapContentInfo für die opak signierte E-Mail-Nachricht (16);
Kopieren und Löschen (48) des eContent-Werts aus encapContentInfo; und
Definieren (50) des extrahierten Inhalts (34) und der extrahierten digitalen Signatur (32) als Inhalt bzw. als digitale Signatur in der klartextsignierten E-Mail-Nachricht (18).

4. Das Verfahren gemäß jedem der Ansprüche 1 bis 3, des Weiteren umfassend den Schritt des Ermittelns, ob die erste E-Mail-Nachricht eine Gruppe von vordefinierten Kriterien für die Konvertierung in das klartextsignierte Format erfüllt.

5. Eine Vorrichtung zur Übertragung von E-Mail, umfassend einen E-Mail-Server (12), wobei der E-Mail-Server umfasst:
Computercode-Mittel, die ausführbar sind, um eine opak signierte E-Mail-Nachricht (16) zu empfangen;
Computercode-Mittel, die ausführbar sind, um die opak signierte E-Mail-Nachricht (16) zu decodieren, um den Inhalt (24) der opak signierten E-Mail-Nachricht zu extrahieren und um die digitale Signatur (22) der opak signierten E-Mail-Nachricht zu extrahieren;
Computercode-Mittel zum Generieren einer klartextsignierten E-Mail-Nachricht (18), wobei die klartextsignierte Nachricht sowohl den extrahieren Inhalt (34) als auch die extrahierte digitale Signatur (32) der opaken E-Mail-Nachricht enthält; und
Computercode-Mittel zum Weiterleiten der klartextsignierten E-Mail-Nachricht (18) an den Empfänger (14).

6. Die Vorrichtung gemäß Anspruch 5, bei der die opak gesicherte E-Mail-Nachricht (16) dem S/MIME-Standard entspricht.

7. Die Vorrichtung gemäß Anspruch 6, bei der das Computercode-Mittel zum Extrahieren des Inhalts (24) und der digitalen Signatur (22) der opak signierten E-Mail-Nachricht (16) die folgenden Schritte implementiert:
Identifizieren (46) der Objekt-encapContentlnfo für die opak signierte E-Mail-Nachricht,
Kopieren und Löschen (48) des eContent-Werts aus encapContentInfo, und
Definieren (50) des extrahierten Inhalts und der extrahierten digitalen Signatur als Inhalt bzw. als digitale Signatur in der klartextsignierten E-Mail-Nachricht (18).

8. Die Vorrichtung gemäß jedem der Ansprüche 5 bis 7, des Weiteren umfassend Computercode-Mittel zum Ermitteln, ob die opak signierte E-Mail-Nachricht (16) eine Gruppe von vordefinierten Kriterien für die Konvertierung in das klartextsignierte Format erfüllt.

9. Ein computerlesbares Medium, umfassend Computercode-Mittel für die Vorrichtung gemäß jedem der Ansprüche 5 bis 8 zum Implementieren des Verfahrens gemäß jedem der Ansprüche 1 bis 4.

## Revendications

1. Procédé informatique pour la transmission de courrier électronique comprenant les étapes suivantes:
l'envoi d'un premier message de courrier électronique sécurisé (16) adressé à un destinataire (14) et comprenant une signature opaque (22) à un serveur de courrier électronique (12);
le décodage du premier message de courrier électronique au niveau du serveur de courrier électronique (12) pour extraire le contenu du premier message de courrier électronique et pour extraire la signature numérique du premier message de courrier électronique;
la génération d'un message de courrier électronique signé en clair (18) au niveau du serveur de courrier électronique (12), le message signé en clair comprenant tant le contenu extrait (34) que la signature numérique extraite (32) du premier message de courrier électronique; et la transmission du message de courrier électronique signé en clair au destinataire (14).

2. Procédé de la revendication 1 dans lequel le premier message de courrier électronique (16) est conforme au standard S/MIME.

3. Procédé de la revendication 2 dans lequel l'étape d'extraction du contenu et de la signature numérique du premier message de courrier électronique comprend les étapes consistant à:
identifier (46) l'objet encapContentInfo pour le message de courrier électronique opaquement signé (16);
copier et effacer (48) la valeur eContent de encapContentInfo; et définir (50) le contenu extrait (34) et la signature numérique extraite (32) comme le contenu et
la signature numérique dans le message de courrier électronique signé en clair (18).

4. Procédé de l'une quelconque des revendications 1 à 3 comprenant en outre l'étape consistant à déterminer si le premier message de courrier électronique rempli un ensemble de critères prédéfinis pour la conversion au format signé en clair.

5. Appareil pour la transmission de courrier électronique, comprenant un serveur de courrier électronique (12), le serveur de courrier électronique comprenant:
des moyens exécutables de code informatique pour recevoir un message de courrier électronique opaquement signé (16);
des moyens exécutables de code informatique pour décoder le message de courrier électronique opaquement signé (16) pour extraire le contenu (24) du message de courrier électronique signé opaquement et pour extraire la signature numérique (22) du message de courrier électronique signé opaquement;
des moyens de code informatique pour générer un message de courrier électronique signé en clair (18), le message signé en clair comprenant tant le contenu extrait (34) que la signature numérique extraite (32) du message de courrier électronique opaque; et des moyens de code informatique pour faire suivre le message de courrier électronique signé en clair (18) au destinataire (14).

6. Appareil de la revendication 5 dans lequel le message de courrier électronique opaque sécurisé (16) est conforme au standard S/MIME.

7. Appareil de la revendication 6 dans lequel les moyens de code informatique pour extraire le contenu (24) et la signature numérique (22) du message de courrier électronique opaquement signé (16) mettent en oeuvre les étapes consistant à:
identifier (46) l'objet encapContentInfo pour le message de courrier électronique opaquement signé;
copier et effacer (48) la valeur eContent de encapContentInfo; et définir (50) le contenu extrait et la signature numérique extraite comme le contenu et la signature numérique dans le message de courrier électronique signé en clair (18).

8. Appareil de l'une quelconque des revendications 5 à 7 comprenant en outre des moyens de code informatique pour déterminer si le message de courrier électronique opaquement signé (16) remplit un ensemble de critères prédéfinis pour la conversion au format signé en clair.

9. Support lisible par un ordinateur comprenant des moyens de code informatique pour l'appareil de l'une quelconque des revendications 5 à 8 pour mettre en oeuvre le procédé de l'une quelconque des revendications 1 à 4.
